(19) Europäisches Patentamt

European Patent Office

Office européen des brevets

(11) **EP 1 500 951 B1**

(12) **FASCICULE DE BREVET EUROPEEN**

(45) Date de publication et mention de la délivrance du brevet:
**20.01.2010 Bulletin 2010/03**

(51) Int Cl.:
***G01S 13/00*** *(2006.01)*

(21) Numéro de dépôt: **04103467.9**

(22) Date de dépôt: **21.07.2004**

(54) **Procédé de détection et localisation multistatique d'engin par l'utilisation d'émetteurs de diffusion numériques**

Verfahren zur multistatischen Detektion und Ortung eines beweglichen Objektes mittels digitaler Rundfunksender

Method for the multistatic detection and locating of a mobile craft through the use of digital broadcasting transmitters

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR MK**

(30) Priorité: **25.07.2003 FR 0309167**

(43) Date de publication de la demande:
**26.01.2005 Bulletin 2005/04**

(73) Titulaire: **Thales**
**92200 Neuilly Sur Seine (FR)**

(72) Inventeurs:
• **Delaveau, François**
**94117 CX, ARCUEIL (FR)**
• **Heurguier, Dominique**
**94117 CX, ARCUEIL (FR)**

• **Buscailhon, Philippe**
**94117 CX, ARCUEIL (FR)**
• **Pipon, François**
**94117 CX, ARCUEIL (FR)**
• **Gross, Emmanuel**
**94117 CX, ARCUEIL (FR)**
• **Josset, Dieudonné**
**94117 CX, ARCUEIL (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 0 669 729     WO-A-02/097467**
**WO-A-03/014764**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne un procédé permettant de détecter et de localiser des engins mobiles (aéronefs par exemple, mais aussi bâtiments de surface, submersibles, véhicules, etc.), en exploitant notamment le rayonnement produit par des émetteurs présents dans l'environnement pour d'autres applications (appelés dans la suite émetteurs d'opportunité).

Elle s'applique avec tout émetteur de communication ou tout système de transmission utilisant des formes d'onde présentant un protocole de synchronisation connu sur une ou plusieurs des fréquences porteuses exploitées par l'émetteur.

Elle est notamment utilisée avec des systèmes comportant des émetteurs numériques dédiés à la vidéo diffusion (exemple DVB-T ou Digital Video Broadcasting-Terrestrial) ou à l'audio diffusion (DAB ou Digital Audio Broadcasting) ou encore les émetteurs d'infrastructure des réseaux cellulaires, (PMR ou Private Mobile Radio).

Les solutions actuellement existantes ou prévues pour localiser les aéronefs sont en majorité basées sur des principes généraux des radars, des intercepteurs de radar ou des IFF (Identification Friend or Foe) dans le domaine électromagnétique, des sonars et des intercepteurs de sonar dans le domaine acoustique.

## Génération contrôlée par un émetteur prévu à cet effet

La solution de type radar ou sonar utilise une onde destinée à se réfléchir sur les obstacles (aéronef, etc.) et exploite le trajet réfléchi par un récepteur collaborant avec l'émetteur :

- soit collocalisé avec l'émetteur, sonar actif ou radar mono statique,
- soit délocalisé par rapport à l'émetteur :

    * sonar actif ou radar bi-statique — un émetteur et un récepteur
    * radar multistatique - plusieurs émetteurs et un ou plusieurs récepteurs.

Ces solutions présentent néanmoins l'inconvénient d'utiliser des émetteurs spécifiques collaborant étroitement avec le système de réception du signal induit par la présence des aéronefs. De tels émetteurs sont indiscrets, souvent onéreux et encombrants. Ils sont de plus généralement dédiés à certaines applications particulières. Leur nombre est faible, leur encombrement souvent important et leur disponibilité parfois réduite.

## Exploitation du rayonnement propre produit

D'autres solutions exploitent le rayonnement propre produit :

- par un émetteur spécifique à l'engin mobile. C'est le principe bien connu des IFF et des systèmes utilisés en contrôle aérien pour identifier et suivre les avions. Ce principe est aussi utilisé dans les intercepteurs de radar ou des intercepteurs de sonar.
- par l'engin mobile lui même (exemples : sonar passif, détection d'anomalie magnétique ou électromagnétique). Ce rayonnement peut provenir directement de l'engin mobile, résulter d'un phénomène de masquage d'une source de rayonnement (ombre), ou plus généralement provenir d'une modification temporaire et locale du champ électromagnétique ou acoustique/sismique ambiant : principe de la détection d'anomalie appliqué par exemple pour activer des autodirecteurs de mines pour certains capteurs de surveillance, etc..

Ces solutions présentent les inconvénients suivants :

- elles sont passives, sans aucune collaboration avec l'émetteur,
- elles ne fonctionnent qu'en cas d'émissions effectivement détectables par un système de réception, ce qui pose des problèmes de "rendez-vous", induit des aléas, peut nécessiter un apprentissage, etc.

De plus, ces solutions produisent une mesure brute de nature principalement angulaire. La distance n'est obtenue qu'après un filtre de poursuite sous certaines conditions de mise en oeuvre généralement restrictives.

## Exploitation du rayonnement propre émis par des émetteurs d'opportunité et réfléchi par les cibles

De tels procédés sont mis en oeuvre pour exploiter la présence fortuite d'émetteurs radar ou autres, à des fins de détection des cibles présentes dans l'environnement par des récepteurs prévus à cet effet. Ils reposent sur des mesures classiques de différences de temps d'arrivée, TDOA (Time Difference of Arrival) ou des déterminations d'angle DOA (Direction Of Arrival), et parfois sur des techniques de soustraction Doppler.

Le document WO/014764 décrit un tel procédé permettant de déterminer la position d'une cible au d'émetteurs d'opportunité.

Ces solutions présentent actuellement les inconvénients suivants :

- les systèmes envisagés ou existants se basent essentiellement sur les propriétés d'enveloppe et les propriétés Doppler des ondes émises (souvent des ondes multi porteuses).
- les systèmes envisagés ou existants nécessitent généralement la réception simultanée du trajet direct et du trajet réfléchi cible pour déterminer une différence entre les instants d'arrivée.
- aucun de ces systèmes ne possède à ce jour de capacités performantes de séparation des émetteurs d'opportunités présents. Pour cette raison :

    - les émetteurs d'opportunités envisagés dans de nombreux systèmes existants sont en nombre très réduit (généralement un seul par bande de traitement) ce qui a pour effet de limiter la précision de localisation produite ou d'allonger considérablement le délai nécessaire à la production d'une localisation de bonne qualité.
    - les systèmes de réception existants capables aujourd'hui de traiter des émetteurs d'opportunité sont difficilement intégrables dans des réseaux relativement denses d'émetteurs partageant la même ressource en fréquence tels que des réseaux destinés à la radio-diffusion (DVB-T, DAB) ou aux transmissions cellulaires (GSM ou Global System Mobile, UMTS ou Universal Mobile Telecommunication System), alors que la densité d'émetteurs est un facteur notable de performances (multiplicité des mesures et des configurations géométriques).

Les systèmes actuels ne permettent par de traiter efficacement des situations multi émissions complexes et encore moins des situations d'interférences entre les signaux reçus.

L'idée de l'invention réside notamment dans l'exploitation de la présence d'émetteurs de certains réseaux de radio et télédiffusion tels que les réseaux DVB-T, DAB ou les émetteurs d'infrastructure des réseaux cellulaires, PMR ou autres. Elle utilise notamment les opportunités de synchronisation temporelle des signaux, ainsi que des procédés performants de séparation de sources

L'invention exploite notamment le protocole et les séquences de synchronisation connus dans certains réseaux de diffusion audionumérique ou vidéo numérique ou encore dans les réseaux cellulaires pour séparer les émetteurs et les signaux, déterminer directement les instants et les directions d'arrivée des différents trajets de propagation et la réponse impulsionnelle du filtre de propagation.

L'invention concerne un procédé pour détecter et/ou localiser un engin mobile dans un système de réception exploitant des émetteurs d'opportunité dont le signal comprend des éléments permettant la synchronisation du récepteur. Il est caractérisé en ce qu'il comporte au moins les étapes suivantes :

    a) détecter certaines séquences « discriminantes » du signal utile,
    b) séparer chaque émission présente sur les fréquences porteuses scrutées par le ou les récepteurs par filtrage spatio-temporel des signaux présents sous chaque fréquence porteuse,
    c) identifier les émetteurs Ei correspondant aux signaux reçus,
    d) déterminer la réponse impulsionnelle du canal de propagation pour chaque émetteur Ei et pour chaque détection réalisée sur cet émetteur,
    g) mesurer l'instant d'arrivée du trajet réfléchi par l'engin mobile puis son retard par rapport à l'instant d'émission de l'émetteur,
    h) déduire la position de l'engin mobile à l'intersection des ellipsoïdes définis par les foyers constitués des émetteurs Ei reçus et du ou des récepteurs Rj.

Le procédé comporte par exemple les étapes suivantes :

    e) séparer dans la réponse impulsionnelle la contribution du trajet direct émetteur-récepteur de la contribution du trajet réfléchi mobile;
    f) mesurer l'instant d'arrivée du trajet direct puis son retard par rapport à l'instant d'émission de l'émetteur;
    g) mesurer l'instant d'arrivée du trajet réfléchi par l'engin mobile puis son retard par rapport au signal direct de l'émetteur.

Le procédé peut aussi comporter :

    i) une étape de mesure des angles d'arrivée du signal réfléchi mobile au niveau des récepteurs Rj,

j) une étape de déduction de la position du mobile à l'intersection des ellipsoïdes précédemment définies et de la droite définie par les angles d'arrivée et le lieu du récepteur Rj .

Le procédé selon l'invention offre notamment les avantages suivants :

- des gains importants de traitement,
- une capacité de séparation des différents émetteurs partageant une même porteuse ou fréquence porteuse, ce qui permet à la fois d'éviter la gêne due aux interférences et d'appliquer simultanément le procédé sur plusieurs émetteurs,
- la possibilité d'utiliser de manière passive (sans modification de l'environnement radioélectrique) et discrète les émetteurs présents pour des applications classiques de radio ou télédiffusion numérique (DAB, DVB) et plus généralement tout réseau d'émetteurs de forme d'onde connue (soit par la normalisation, soit par analyse préalable) possédant certaines propriétés de synchronisation temporelle destinées à l'accrochage des récepteurs (émission de mots de synchronisation, séquences d'apprentissages, codes pilotes, etc..) tels que des réseaux d'infrastructure cellulaire, des réseaux PMR, des réseaux satellite, etc..
- produire directement une localisation complète d'un engin mobile en utilisant des émissions permanentes aux caractéristiques prévisibles permettant des mesures multiples et fiables,
- construire des réseaux de capteurs à grande couverture sans nécessité de recevoir le trajet direct de l'émetteur sur le récepteur traitant le trajet réfléchi sur l'engin mobile provenant de ce même émetteur.

D'autres caractéristiques et avantages de la présente invention apparaîtront mieux à la lecture de la description non limitative qui suit annexée des figures qui représentent :

- la figure 1 un exemple de configuration géométrique d'un système émetteur-récepteur — aéronef à localiser,
- la figure 2 l'exploitation des signaux reçus sur le récepteur,
- la figure 3 un exemple de configuration exploitant uniquement le signal réfléchi par l'aéronef mobile,
- la figure 4 un exemple de principe de détection utilisant une fenêtre temporelle glissante,
- la figure 5 un exemple de traitement de synchronisation et de séparation spatiale des sources,
- la figure 6 un exemple d'estimation de canal mono voie et de calcul de puissance,
- la figure 7 les caractéristiques des signaux GSM,
- la figure 8 les caractéristiques des émetteurs DVB-T.

Afm de mieux faire comprendre le principe mis en oeuvre par l'invention, l'exemple d'application qui suit est donné à titre illustratif et nullement limitatif pour localiser un aéronef dans un système de réception basé sur un réseau d'antennes et une architecture multivoies pour la réception et la numérisation des signaux. Les signaux sont de type numériques et comportent une séquence permettant la synchronisation du récepteur.

Le système de réception comporte par exemple plusieurs capteurs multivoies et un ou plusieurs processeurs adaptés à exécuter des techniques de séparation spatio-temporelles. Un processeur est notamment adapté pour réaliser les opérations suivantes :

- se synchroniser sur le signal reçu et sur les différents trajets de propagation provenant de l'émetteur :le signal direct s'il est reçu, et/ou le signal réfléchi par l'aéronef.
- mesurer une réponse impulsionnelle du canal de propagation, séparer les différents trajets et en mesurer leurs instants d'arrivée, avec une précision dépendant des caractéristiques du signal traité et de la durée d'intégration du traitement de synchronisation,
- mesurer éventuellement les angles d'arrivée des différents trajets de propagation par des techniques de goniométrie dédiées prolongeant directement la synchronisation,
- séparer les différents émetteurs partageant une ressource radioélectrique commune, afin :

- de réaliser des mesures individualisées sur chaque émetteur présent dans la bande d'analyse,
- d'exploiter la multiplicité des émetteurs pour une détection multi statique à "grand nombre d'émetteurs".

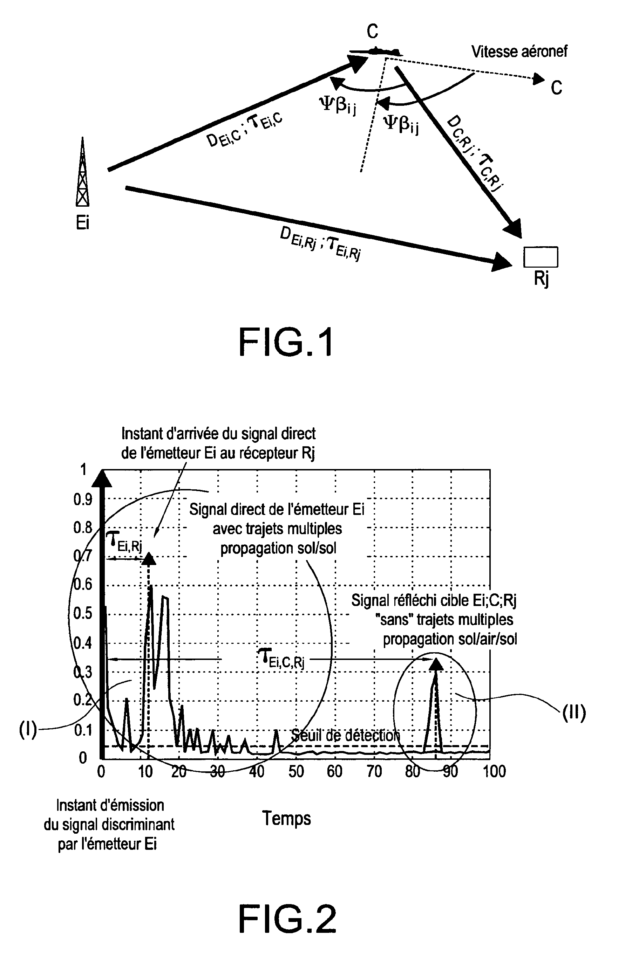

La figure 1 schématise un exemple de mise en oeuvre du procédé selon l'invention, pour un dispositif comportant au moins un émetteur Ei, un récepteur Rj et un aéronef C, pour des signaux numériques comprenant des séquences discriminantes permettant la synchronisation.
($\Psi\beta i,j$ est l'angle bistatique = $\Psi$IeiC-$\Psi$Irj,C ; $\Psi$Bi,j = la bissectrice ($\Psi$IeiC+$\Psi$Irj,C)/2 ; $\tau_{Ei,C}$ la durée trajet émetteur Ei cible ; $D_{Ei,C}$ la distance trajet émetteur cible ; $\tau_{C,Rj}$ la durée trajet cible récepteur Rj, $D_{C,Rj}$ la distance trajet cible récepteur Rj ; $\tau_{Ei,Rj}$ la durée trajet émetteur Ei récepteur Rj, $D_{Ei,Rj}$ la distance trajet émetteur Ei récepteur Rj ).

La procédé comporte par exemple les étapes suivantes :

a) détecter certaines séquences du signal de radiodiffusion ou de télédiffusion numérique, effectuer des mesures de synchronisation sur les signaux provenant des émetteurs reçus. Les séquences utilisées sont les séquences permettant la synchronisation des récepteurs. La détection peut se faire par filtrage adapté connu de l'Homme du métier;

b) séparer chaque émission présente sur les fréquences porteuses scrutées par le ou les récepteurs, par exemple par filtrage différentiel des différentes porteuses, puis par filtrage spatio-temporel des signaux présents sur chaque porteuse;

c) identifier l'émetteur Ei correspondant. L'identification est par exemple effectuée par décodage de l'identité de l'émetteur lorsqu'elle est codée dans la signalisation, par la mesure de l'instant d'arrivée et des récurrences entre instants d'arrivée, par détermination des caractéristiques de couleur et de synchronisation, ou tout autre procédé connu de l'Homme du métier;

d) déterminer la réponse impulsionnelle Hi du canal de propagation pour chaque émetteur Ei et pour chaque détection réalisée sur cet émetteur (la détection de l'émission est faite par le récepteur);

e) séparer dans cette réponse impulsionnelle Hi la contribution éventuelle du trajet direct émetteur-récepteur (Ei-Rj) de la contribution du trajet réfléchi par l'aéronef (Ei-C- Rj). On utilise par exemple les propriétés statistiques et les propriétés Doppler du signal réfléchi par l'aéronef, qui, compte tenu de la propagation sol/air/sol et du mouvement de l'aéronef possède les propriétés suivantes :

- le trajet Ei-C-Rj subit moins de fluctuations que le signal direct ou les échos de sol, ce qui facilite les procédés d'intégration et d'extraction,
- le trajet Ei-C-Rj est affecté d'un décalage Doppler que ne subit pas le trajet direct ni les échos de sol, ce qui permet de mettre en oeuvre des techniques de soustraction Doppler connue de l'homme du métier

f) mesurer l'instant d'arrivée $t_{Ei-Rj}$ du trajet réfléchi direct (EiRj), s'il est reçu, puis son retard $\tau_{Ei,Rj}$ par rapport à l'instant d'émission $t_{Ei}$ de l'émetteur Ei s'il est connu ou préalablement relevé,

g) mesurer l'instant d'arrivée $t_{Ei-C-Rj}$ du trajet réfléchi aéronef (E$_i$-C-R$_j$), puis son retard $\tau_{Ei,C,Rj}$ par rapport au signal direct de l'émetteur Ei, si ce dernier est reçu, ou bien son retard $\tau_{Ei,C,Rj}$ - $\tau_{Ei,Rj}$ par rapport à l'instant d'émission $t_{Ei}$ du signal par l'émetteur lorsque cet instant est connu ou préalablement relevé,

h) en déduire la position de l'aéronef à l'intersection des ellipsoïdes définis par les foyers constitués des émetteurs E$_i$ reçus et du ou des récepteurs Rj et par les relations suivantes:

pour i et j $d(E_i,M) + d(R_j,M) - d(E_i,R_j) = c.(\tau_{Ei,C,Rj} - \tau_{Ei,Rj})$    (1)    avec c la célérité de la lumière, $\tau_{Ei,C,Rj}$ - $\tau_{Ei,Rj}$ le retard entre le trajet E$_i$-C-R$_j$ et le trajet E$_i$-R$_j$ corr espondant à l'émetteur E$_i$ et au récepteur R$_j$.

i) mesurer éventuellement les angles d'arrivée du signal réfléchi cible (azimut θj, site Δj) au niveau des récepteurs Rj,

j) déduire la position de l'aéronef (engin mobile) C à l'intersection des ellipsoïdes précédemment définies et de la droite définie par les angles d'arrivée θj et Δj du signal réfléchi cible.

La réception du trajet direct permet notamment :

- de renforcer le procédé lorsque la synchronisation des émetteurs est déjà connue : deuxième détermination du paramètre $\tau_{Ei,Rj}$; ou
- de s'affranchir de la connaissance de synchronisation des émetteurs: l'écart temporel $\tau_{Ei,C,Rj}$ - $\tau_{Ei,Rj}$ ; est alors mesuré directement après identification du trajet direct et du trajet réfléchi.

Les émetteurs sont, par exemple, des émetteurs de radiodiffusion et de télédiffusion numériques ou tout autre émetteur numérique de forte puissance présentant des séquences discriminantes connues a priori ou extractibles dans le signal au moyen d'une analyse préalable.

D'autres émetteurs utilisables sont par exemple, des émetteurs radioélectriques numériques dont les caractéristiques sont connues par normalisation ou par analyse préalable. Ils possèdent certaines propriétés de synchronisation. Leurs coordonnées (position) sont par exemple connues antérieurement, ou bien relevées postérieurement à la mise en oeuvre du procédé selon l'invention.

La figure 2 illustre, à titre non limitatif, l'extraction du signal réfléchi de l'aéronef en cas de réception du trajet direct émanant de l'émetteur Ei avec des multi trajets liés à la propagation sol/sol et de réception d'un écho provenant de l'aéronef sur le même récepteur. Pour réaliser l'étape a) de synchronisation, le récepteur utilise le signal correspondant au trajet direct. Les pics de la figure 2 sont obtenus en sortie du critère de synchronisation et du filtre d'estimation de canal de propagation utilisés dans le traitement de séparation de source. De manière schématique, la courbe de la figure 2 s'apparente à la sortie d'une intercorrélation (multivoies) entre le signal reçu en entrée et une réplique de la séquence discriminante attendue dans le signal reçu. Le procédé d'obtention de cette courbe est détaillé plus précisément sur des exemples illustratifs dans la suite.

Dans un diagramme d'axe des abscisses temporel, le premier groupe (I) de pics correspond au signal direct de l'émetteur Ei avec trajets multiples propagation sol/sol. $\tau_{EiRj}$ correspond aux délais de propagation du signal direct de l'émetteur Ei au récepteur Rj. Le deuxième groupe (II) de pics correspond au signal réfléchi par l'aéronef avec un délai de propagation $\tau_{EiCRj}$. Le trajet Ei; C; Rj , pour un aéronef, s'effectue avec une propagation sol/air/sol "sans" trajets multiples.

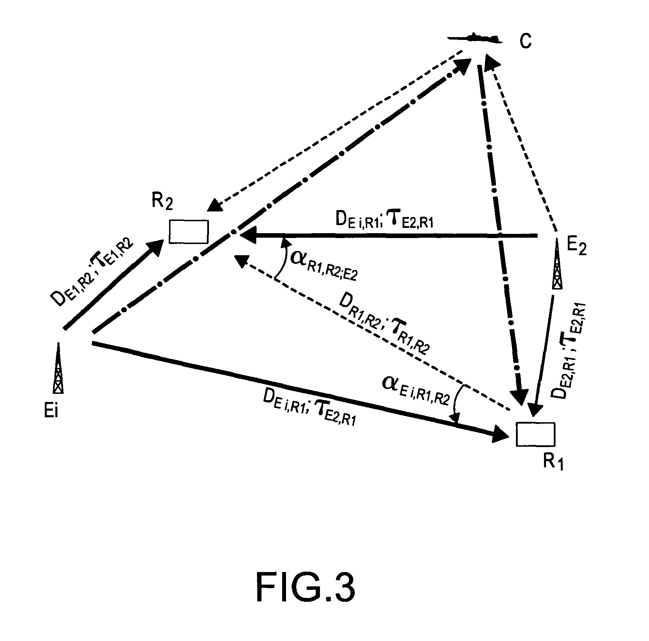

La figure 3 schématise un exemple de configuration du système selon l'invention, permettant de s'affranchir de la réception du trajet direct émanant de l'émetteur Ei sur le récepteur Rj en utilisant uniquement le trajet réfléchi aéronef. Le système comporte par exemple deux émetteurs $E_1$, $E_2$ disposés en réseau, de positions connues et de synchronisation inconnues, et deux récepteurs $R_1$ et $R_2$ de positions connues et de synchronisation communes.

Le système connaît aussi les distances et les azimuts respectifs de $R_1$, $R_2$, $E_1$, $E_2$. Le récepteur $R_1$ reçoit le trajet direct de l'émetteur $E_2$ et le trajet réfléchi aéronef émanant de $E_1$.

Les paramètres utilisés pour le procédé selon l'invention sont :

- le délai de propagation entre $E_1$ et $R_2$ : $\tau_{E1,R2} = D_{E1,R2}/c$ (connu par $R_1$ et $R_2$) Di,j représente la distance entre le dispositif i (émetteur ou récepteur) et le dispositif j
- le délai de propagation entre $R_1$ et $R_2$ : $\tau_{R1,R2} = D_{R1,R2}/c$ (connu par $R_1$ et $R_2$)
- le délai de propagation entre $E_1$ et $R_1$ : $\tau_{E1,R1} = D_{E1,R1}/c$ (connu par $R_1$ et $R_2$)
- le délai de propagation du trajet réfléchi cible E1,C,R1 :

$$\tau_{\mathbf{E1,C,R1}} = (D_{E1,C} + D_{C,R1})/c \text{ (inconnu)} \qquad (2)$$

- l'instant d'émission du signal de référence par $E_1$ : $T0_1$, inconnu de $R_1$
- l'instant d'arrivée de l'émission directe du signal de référence par $E_1$ au récepteur $R_2$:

- 

$$T0_{1,2} = T0_1 + \tau_{\mathbf{E1,R2}} \text{ (mesuré)} \implies T0_1 = T0_{1,2} - \tau_{\mathbf{E1,R2}} \text{ (Calculé)}$$

- L'instant auquel le signal direct de $E_1$ « devrait arriver » en $R_1$ :

- $T0_{1,1} = T0_1 + \tau_{E1,R1} = T0_{1,2} + (\tau_{E1,R1} - \tau_{E1,R2})$ (calculé)
- L'instant d'arrivée du signal réfléchi par la cible
- $T0_{1,C,1} = T0_1 + \tau_{E1,C,R1}$ (mesuré)
- La détermination du délai de propagation du trajet réfléchi cible E1,C,R1

$$\tau_{\mathbf{E1,C,R1}} = T0_{1,C,1} - T0_{1,1} \qquad (3)$$

Les caractéristiques de l'invention permettent d'évaluer les paramètres énoncés ci-dessus, dont la relation avec les différentes étapes du procédé apparaîtra à la lecture de ce qui suit.

**Etape h) Localisation hyperbolique**

Le principe de la localisation hyperbolique consiste à estimer le délai bistatique entre l'émetteur Ei et le récepteur Rj

$$\tau_{\mathbf{Bij}} \; (\tau\beta_{ij} = \tau_{Ei,C} + \tau_{C,Rj} - \tau_{Ei,Rj}) \qquad (4)$$

avec

$\tau_{Ei,C} + \tau_{C,Rj} - \tau_{Ei,Rj}$ correspondant au délai émetteur Ei- aéronef C + le délai aéronef C- récepteur Rj + le délai émetteur Ei- récepteur Rj.

La résolution temporelle de la mesure est Rτ. La propagation étant supposée isocélère de type direct, le lieu des points correspondant au délai bistatique τβij relatif à l'aéronef C est le volume Vij compris entre deux hyperboloïdes, défini par les inégalités suivantes (sur un point M) :

$$-c.R_\tau/2 \leq d(M,Ei) + d(M,Rj) - c.\tau_{Ei,Rj} \leq +c.R_\tau/2 \qquad (5)$$

Des mesures multiples de l'aéronef C sur plusieurs couples émetteurs-récepteurs Eik, Rjk permettent de localiser l'aéronef à l'intersection des volumes Vik,jk défmis par l'inégalité (5).

Une mesure bistatique sur le couple Ei, Rj adjointe à une mesure angulaire Ψc,j [angle sphérique =(gisement, site)] de résolution angulaire $R_\Psi$ au niveau du récepteur Rj permet d'obtenir le lieu de l'aéronef à l'intersection du volume Vij et du cône issu de Rj, d'axe Ψc,j et d'ouverture $R_\Psi$.

En multipliant les mesures sur les couples (Ei, Rj)i,j , le procédé offre la possibilité d'affiner la localisation et le suivi d'un aéronef.

**Mesures de retard**

Pour conduire à l'estimation des paramètres temporels décrits ci-dessus pour la localisation hyperbolique, le procédé selon l'invention met en oeuvre des méthodes qui exploitent notamment les séquences discriminantes employées dans les signaux de transmission numérique pour l'accrochage des récepteurs.

Le procédé utilise la connaissance a priori des séquences discriminantes dans les émissions numériques, normalisées ou connues, pour exécuter les opérations suivantes :

1) construire un estimateur des instants de synchronisation et des fréquences Doppler correspondant à chaque réplique du signal discriminant,

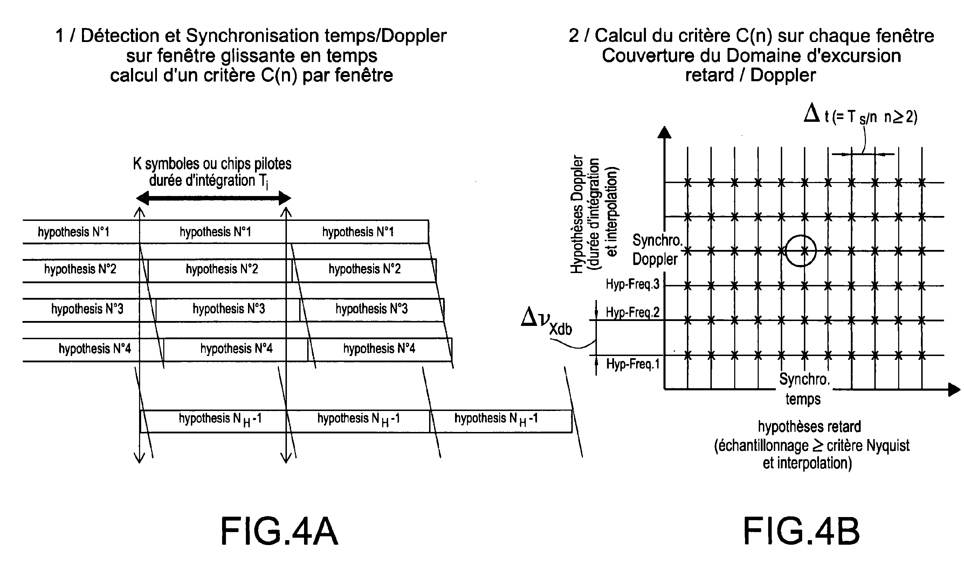

2) séparer par filtrage spatial et temporel les émetteurs simultanément présents sur une même fréquence porteuse selon des principes connus de l'Homme du métier. Des exemples de filtrage sont donnés à titre illustratif et non limitatif aux figures 4, 5 et 6,

3) produire la réponse impulsionnelle du filtre de propagation, par exemple illustrée à la figure 2, dans laquelle figurent :

- les signaux provenant du trajet direct Ei, Rj (plus des trajets multiples éventuels), lorsqu'il est reçu par Rj, à l'issue du délai de propagation t$_{Ei, Rj}$ ;
- les signaux provenant du trajet réfléchi aéronef, Ei, C, Rj (avec peu ou pas de trajets multiples étant donné la transmission sol/air puis air/sol) à l'issue du délai de propagation t$_{Ei,C,Rj}$.

Ces différentes mises en oeuvre sont par exemple appliquées à partir d'un système de réception et de numérisation des signaux prévus à cet effet.

La figure 4 représente un exemple de mise en oeuvre des traitements proprement dits sur des fenêtres glissantes, indexées sur la longueur des séquences discriminantes, la fréquence d'échantillonnage du signal, l'excursion et le maillage du domaine temps fréquence. La première partie 4a de la figure représente la détection et la synchronisation temps/Doppler sur fenêtre glissante en temps et le calcul d'un critère C(n) par fenêtre. La deuxième partie 4b de la figure représente dans un diagramme où l'axe des abscisses correspond à la synchronisation dans le temps et l'axe des ordonnés la synchronisation Doppler, le calcul C(n) sur chaque fenêtre avec la couverture du domaine d'excursion retard/Doppler.

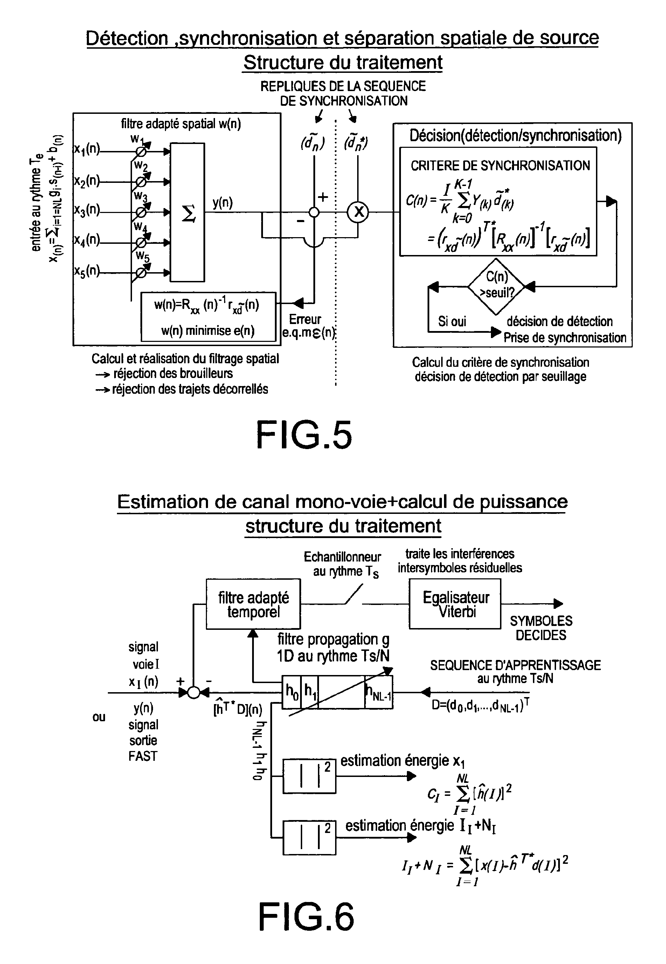

Le procédé de filtrage spatio-temporel pour déterminer les instants d'arrivées ou retard des trajets de propagation aux fins de localisation hyperbolique selon l'invention fait appel à des principes et des algorithmes décrits à titre d'exemples non limitatifs aux les figures 5 et 6. D'autres algorithmes de type similaires peuvent aussi être mis en oeuvre, par exemple des algorithmes de détection jointe, des algorithmes MMSE (Minimum mean Square Error) MLSE (Maximum likehood Sequence Estimator) etc. peuvent être utilisés.

La figure 5 schématise un exemple de structure pour traiter les signaux reçus sur un réseau de capteurs en utilisant un Filtre Adapté Spatial (FAS)

La figure 6 schématise une architecture permettant une estimation de canal mono-voie plus le calcul de puissance.

Ces traitements forment la base de la détection des signaux et de la détermination des variables temporelles nécessaires à la localisation hyperbolique.

**Traitement spatio-temporel - Définitions**

**Variables**

Ts : période symbole, Te période d'échantillonnage, convention d'écriture $f_{(n)}=f(nT_e)$

NL : longueur de la réponse du canal en échantillons

K : longueur de la séquence discriminante (bits ou code pilote, séquence d'apprentissage, etc.)

s : signal émis de la forme $s(t) = \sum_{n=0}^{q} j^n a_n C_0(t - nT)$ toujours avec la convention $s_{(n)} = s_{(nTe)}$

$C_0$ : Fonction principale de modulation

d : séquence d'apprentissage (taille Kx1), d= $(d_1,...,d_K)^T$, $d_K$ scalaire,

$\tilde{d}$ : version de d filtrée par la modulation et le filtre de réception $\tilde{d} = (\tilde{d}_1,..., \tilde{d}_K)^T$

g : réponse du canal multivoie (taille 5xNL) g= $(g_0,...,g_{NL-1})$ avec $g_i$ : 5x1

h : réponse du canal monovoie (taille NLx1) h= $(h_0,...,h_{NL-1})^T$ avec $h_i$ : 1x1

x : signal multivoie en entrée filtré par le canal g et bruité par le bruit total $b_T$

$X_{(n)} = \Sigma_{i=1,NL} g_{(i)} \cdot s_{(n-i)} + b_{T(n)}$ avec $b_{T(n)}$ : bruit total = vecteur (bruit+ interférences)

NOTA : à un instant d'échantillonnage n, $x_{(n)}$, $b_{T(n)}$ sont des vecteurs 5x1

S(n) : matrices NLx1 construites avec les NL échantillons de s : $S_{(n)} = (s_{(n)},... s_{(n+K-1)})^T$

X(n) : matrices 5xK construites avec les K échantillons de x : $X_{(n)} = (x_{(n)},... x_{(n+K-1)})$

D(k) : matrices NLx1 construites avec les NL échantillons de $\tilde{d}$ :

$D(k) = (\tilde{d}_{(k)},..., \tilde{d}_{(k+NL-1)})^T$

**Opérateurs de corrélation**

Matrices d'intercorrélation sur K échantillons moyennée sur K échantillons entre le signal d'entrée x et la

séquence $\tilde{d}$, égale à d modulée par la fonction $C_0$,  $r_{x\tilde{d}}(n) = \frac{1}{K} \sum_{k=0}^{K-1} x_{(n+k)} \tilde{d}_{(k)}^*$  - taille (5*1)

Matrice d'autocorrélation du signal d'entrée x sur K échantillons, moyennée sur K échantillons

$$R_{xx}(n) = \frac{1}{K} \sum_{k=0}^{K-1} x_{(n+k)} x_{(n+k)}^{T*} \text{ - taille } (5*5)$$

Matrice d'intercorrrélation sur NL échantillons du signal d'entrée x et la séquence D, moyennée sur K échantillons - Taille (5*NL) $R_{xD}(n) = \frac{1}{K} \sum_{k=0}^{K-1} x_{(n+k)} D_{(k)}^{T*}$

Matrice d'intercorrrélation sur NL échantillons du signal d'entrée x et de la séquence D, moyennée sur K échantillons - Taille (NL*NL) $R_{dd} = \frac{1}{K} \sum_{k=0}^{K-1} D_{(k)} D_{(k)}^{T*}$

**Détection et synchronisation multivoie par Filtre adapté spatial (FAS)**

Le principe est de trouver l'instant n de synchronisation optimal au sens du Maximum de vraisemblance en Bruit Gaussien Blanc Temporellement.

La solution réside dans l'utilisation d'un filtre w(n) $w(n) = R_{xx}(n)^{-1}.r_{x\tilde{d}}(n)$ (estimée MC du filtre de Wiener)

W réalise le critère $\underset{\hat{w}}{Min} \left\{ \left\| \hat{W}^{T^*} x(k) - \tilde{d}(k)^2 \right\| \right\}$

Ce filtre appliqué au signal maximise, en sortie, la corrélation avec la séquence. La corrélation est donnée à l'instant n par C(n).

$$C(n) = \left( r_{x\tilde{d}}(n) \right)^{T^*} R_{xx}(n)^{-1} . r_{x\tilde{d}}(n) = \frac{1}{K} \sum_{k=1}^{K} y(n+k) \tilde{d}(k)^*$$

Cas monodimensionnel : C(n) est simplement l'intercorrélation de x et normalisée par $\|x\|\|\tilde{d}\|$ sur une fenêtre de longueur K (<=> récepteur optimal en cas mono-trajet).

**Estimation de canal puis calcul de puissance sur séquence discriminante par Filtre Adapté Temporel**

**Estimation de canal et calcul de puissance sur séquence discriminante**

Le principe est de minimiser l'expression suivante pour un $\tilde{h}$

$$\underset{\hat{h}}{Min} \left\{ \left\| x_I(k) - \hat{h}^{T^*} D(k)^2 \right\| \right\}$$

avec $x_I$ le signal sur la voie n˚I et $\hat{h}^{T}*D(k)$ la réplique de la séquence d'apprentissage filtrée par une estimation $\hat{h}$ du canal. Les solutions sont :

$$\hat{h} = \left( DD^{T^*} \right)^{-1} \left( D^{T^*} x_I \right) = Rd^{-1} r_{DX}$$

énergie du signal estimée sur la séquence d'apprentissage $C = \sum_{l=1}^{N} \left| h(l)^2 \right|$  énergie bruit +brouilleurs estimée sur la séquence d'apprentissage

$$I_I + N = \sum_{l=1}^{N} \left| x(l) - \hat{h}^{T^*} d(l) \right|^2$$

En terme de sensibilité, les performances produites par ce type de traitement sont globalement les suivantes:

1 Gain de traitement en réception «directe» $GT_\Delta$ de l'ordre de $GT_\Delta = 10 \log 10 (B_e.\tau_e)$

2 Dégradation possible du gain $GT_B$ de traitement en configuration bistatique de quelques dB par allongement, décohérence et dépolarisation du signal exploité dans les traitements lors de la réflexion sur la cible C

3 Sensibilité en réception $\eta_{dB}$ face au bruit pour une marge de détection MdB de l'ordre de

$$\eta_{dB} = -174,6 + M_{dB} + 10 \log_{10} (B) - GT_B \ (dBm)$$

4 Réjection de brouilleurs performante sur une architecture de réception multivoie, dont les performances exactes dépendent :

4.1 - du nombre de voies de réception et de la qualité de leur synchronisme
4.2 - du nombre de signaux simultanément reçus dans la durée et la bande de traitement
4.3 - de la fonction d'auto corrélation de la séquence de synchronisation utilisée
4.4 - de la matrice d'inter corrélation entre différentes séquences de synchronisations (s'il en existe plusieurs)
4.5 - des post traitements de réjection de fausse alarme mis en oeuvre (post-traitements rendus nécessaires à la fois par les défauts de la matrice d'auto corrélation de chaque séquence discriminante et des inter corrélations possibles entre séquences s'il en existe plusieurs).

Globalement, on peut considérer d'un point de vue pratique que les performances en réjection de brouilleurs atteignent une valeur de -7 + $GT_B$ et plus, dès lors que le nombre de voies de réception est supérieur au nombre de sources présentes.

Dès lors que le nombre de voies de réception est supérieur au nombre de sources présentes, les mesures de détection et détermination de la réponse impulsionnelle du canal de propagation peuvent ainsi être conduites sur un signal S en entrée de récepteur s'il est reçu avec un niveau de bruit $N_B$ et un niveau de brouillage ou d'interférences I tel que

$$S_{utile\_entrée}/(N_B+I) > -7 + GT_B \text{ (dB)}$$

**Traitement des zones aveugles**

Lorsque le signal direct est reçu, la réception «simultanée» dans la même case de résolution en distance du signal réfléchi cible induit une zone aveugle définie par

$$0 \leq d(M,Ei) + d(M,Rj) \leq +c.\tau_a \; ; \qquad \kappa > 0$$

La «durée aveugle» $\tau_a$ considérée dans la définition de la zone aveugle peut être différente de la résolution du traitement temporel des signaux.

Elle dépend en toute rigueur du signal discriminant utilisé, les performances de traitement de réjection des brouilleurs et des interférences, mais aussi des niveaux relatifs du signal direct lorsqu'il est reçu et du signal réfléchi cible.

En pratique $\tau_a$ varie entre deux valeurs extrêmes qui sont:

1 - Cas favorable $\tau_a = R_\tau/2$ , moitié de la résolution du traitement de synchronisation

Ce cas survient lorsque le signal direct est suffisamment faible pour être effectivement réjecté dans le traitement de synchronisation si l'écart entre les instants d'arrivée est supérieur à $R_\tau/2$.

2 - Cas défavorable $\tau_a = T_e$, durée du signal émis.

Ce cas survient lorsque le signal direct est trop fort et sature le traitement de synchronisation. Si le signal est continu, ceci signifie qu'aucune mesure ne peut être effectuée sans limitation du niveau reçu du signal direct par un procédé externe au traitement :

- directivité d'antenne,
- éloignement du système de réception,
- ou toute autre méthode favorisant le bilan de liaison sur le signal réfléchi cible.

Dans tous les cas, cette zone aveugle est un ellipsoïde de foyer Ei et Rj défini par $\tau_a$.

Compte tenu du régime des pertes de propagation en configuration sol/sol, un éloignement suffisant des récepteurs et des émetteurs permet d'obtenir la configuration favorable 1 pour la mise en oeuvre de l'invention.

**Traitement des zones d'ambiguités**

Pour traiter les zones d'ambiguïtés provenant de la répétition des séquences discriminantes identiques avec la période $T_R$ et définies par

$$-c.R_\tau/2 \le d(M,Ei) + d(M,Rj) - c.(\tau_{Ei,Rj} + k.T_R) \le +c.R_\tau/2; \text{ k entier} > 0$$

le procédé exécute des mesures multiples de l'aéronef sur plusieurs couples Ei, Rj ou une trajectographie de l'aéronef sur plusieurs détections.

Ces zones d'ambiguïté sont des couronnes d'ellipsoïdes de foyer Ei et Rj, d'épaisseur $R_\tau$.

En pratique, dans les exemples mentionnés ci-après pour la mise en oeuvre de l'invention, les distances d'ambiguïté sont soit de l'ordre de grandeur, soit supérieures à la portée du système.

De plus, dans les cas extrêmes, des mesures multiples de la cible C sur plusieurs couples Ei, Rj ou une trajectographie de la cible sur plusieurs détections permettent de résoudre les ambiguïtés: post-traitement consécutif à mise en oeuvre de l'invention sur une durée significative et/ou avec plusieurs détections et localisations de la cible.

Le procédé selon l'invention peut s'appliquer pour différentes types d'émetteurs et pour différents types de traitement dont certains vont être décrits comme des exemples d'applications non limitatifs du procédé selon l'invention.

Le tableau I représente une synthèse des données concernant des émetteurs d'opportunités utilisables pour exécuter le procédé selon l'invention.

| Classes | Bande (MHz) | Puissance équivalente rayonnée kW | Ouverture Gisement | Ouverture Site | Largeur de bande | Identification Emetteur |
|---|---|---|---|---|---|---|
| Emetteurs DVB-T Polar H | 470-860 | 5-100 | 360˚ | 10˚ | 8 MHz, 7 MHz 6 MHz | Décodage dans les sous-porteuses TPS |
| BTS GSM | 900, 180 0, 1900, futur 400 | 20-1 | 360˚ ou 180˚ ou 120˚ | 5 à 20˚ | N*200 kHz N varie entre 1 et 32 | Décodage CI, BSIC et LAI dans canaux BCCH sur voie balise |
| BSIC = Base Station Identity Code CI = Cell identity LAI = Location Area Code BCCH = BroadCast Channel | | | | | | |

**Caractéristiques des signaux GSM (d'après la norme ETSI GSM 04:08)**

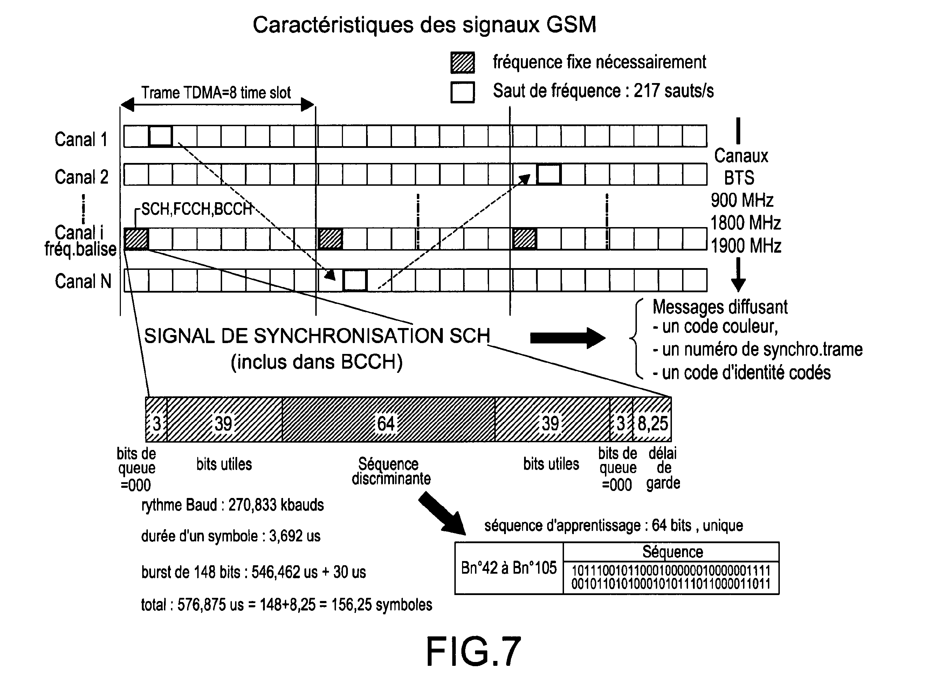

Les principales caractéristiques utilisées dans les signaux mentionnés sont représentés à la figure 7.

Le signal de synchronisation SCH inclus dans le canal BCCH comporte les messages diffusant un code couleur BSIC et un code d'identité CI permettant notamment d'identifier l'émetteur un numéro de synchronisation, La séquence discriminante est unique et codée sur 64 bits .

**Caractéristiques des signaux DVB-T**

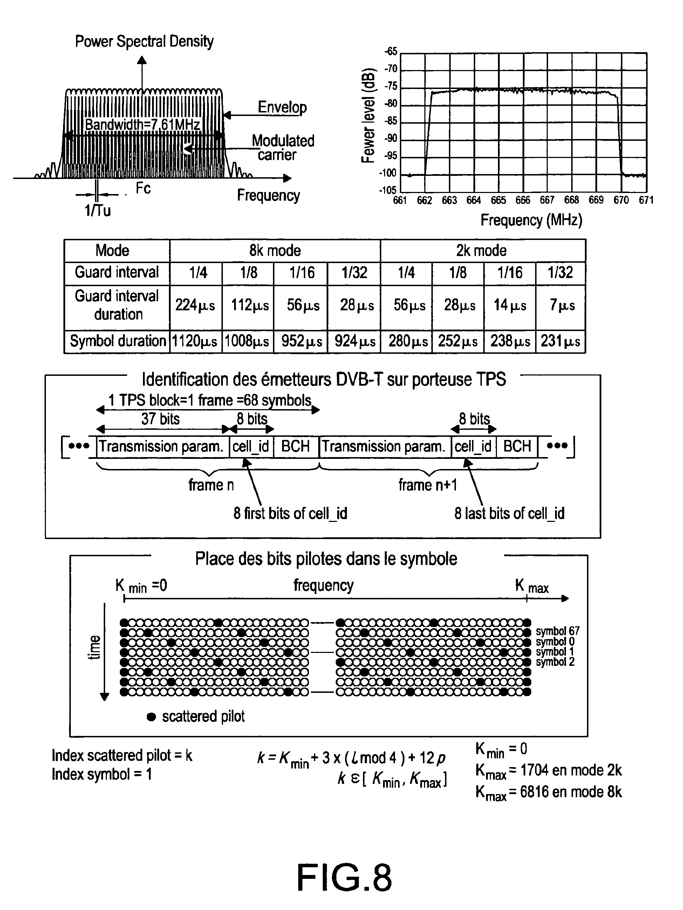

La figure 8 représente les caractéristiques des signaux DVB-T utilisées dans le procédé selon l'invention. L'identification des émetteurs DVB-T s'effectue par décodage des sous porteuses TPS. 8 bits de l'étiquette Cell-id sont par exemple utilisés pour identifier un émetteur.

**Exemples chiffrés de mise en oeuvre du procédé selon l'invention pour des infrastructures DVB-T et GSM .**

Pour les émetteurs DVB-T en mode 8K (8192 sous porteuse), la «meilleure» séquence discriminante candidate est le signal pilote diffus (ou «scattered pilot») présent sur chaque symbole (de durée de l'ordre de la milliseconde), et identique tous les quatre symboles (Cf figure 8).

En supposant ce signal non amplifié ou atténué dans le signal émis, la séquence discriminante occupe sur un symbole 568 sous porteuses à raison d'une sous porteuse sur 12, ce qui conduit aux paramètres caractéristiques suivants :

- une bande équivalente de l'ordre de 8 MHz

- un gain de traitement «direct» $GT_\Delta$ = 10 log10 (568) = 27,5 dB

- un rapport $S_{utile\_entrée}/I$ sur un symbole = $-10.\log_{10}(12)$ = -11 dB

- une récurrence d'apparition d'une séquence donnée de 568 de scattered pilot toutes les 4 millisecondes

$\Rightarrow$ distance d'ambiguïté = 120 km, de l'ordre de la portée espérée du système

$\Rightarrow$ peu d'ambiguïté distance.

Pour les infrastructures GSM, la «meilleure» séquence discriminante candidate est le signal de synchronisation SCH présent sur la voie balise de chaque station de base (figure 7).

En supposant que ce signal n'est ni amplifié ni atténué dans le signal émis, la séquence discriminante occupe 64 symboles sur un burst de 577 microsecondes à raison d'environ 20 séquences identiques par secondes, ce qui conduit aux paramètres caractéristiques suivants :

- une bande équivalente de l'ordre de 270 kHz

- un gain de traitement « direct » $GT_\Delta$ = 10 log10 (64) = 18 dB

- une récurrence d'apparition tous les 50 millisecondes environ,

$\Rightarrow$ distance d'ambiguïté = 15.000 km environ très supérieure à la portée espérée du système

$\Rightarrow$ pas d'ambiguïté distance.

Compte tenu des gains de traitements correspondants aux signaux évoqués plus haut et des possibilités de réjection de fausses alarmes liés à la connaissance à priori des séquences employées, on considère dans la suite, de manière simplifiée, que la détection et les mesures sont possibles lorsque l'excès de rapport signal à bruit + interférences en sortie traitement est positif compte tenu d'une marge M prise à la valeur de 7 dB.

**Application numérique**

Pour illustrer les performances du procédé selon l'invention, dans l'exemple suivant on considère les cas nominaux d'exploitation de station de base GSM et d'émetteurs DVBT avec

- des cibles présentant une surface équivalente SER (surface de réflexion) variant de 10 m$^2$ (petit avion) à 100 m$^2$ (avion de ligne) dans la bande de 400 MHz à 1 GHz,

- des puissances équivalentes rayonnées par les émetteurs de l'ordre de 20 W à 10 kW - terme PeGe,

- des bandes de fréquences de 500 kHz (DVB-T) et 900 MHz (GSM),

- des bandes de réception de 300 kHz (GSM) et 8 MHz (DVB-T mode K sur BW 8 MHz) - terme BW,

- des séquences discriminantes exploitées comme référence dans le signal émis dont le produit $Be.\tau_e$ varie entre :

■ 64 (séquence de synchronisation SCH des voies de signalisation GSM),
■ et 512 (scattered pilot d'un symbole DVBT),

- une réception par des antennes de type dipôle accordé (gain de l'antenne en réception $G_{AR}$ = 2 dBi),

- une dégradation du gain de traitement bistatique de 3 dB,

- des pertes de propagation sol/air et air/solde type géométrique en $1/R^2$, R étant la distance parcourue par le trajet, de quelques kilomètres à plusieurs dizaines de kilomètres selon les cas,

- une marge M égale à 7 dB pour le calcul de l'excès de rapport signal à bruit.

Les caractéristiques de réception prise en compte sont récapitulées dans deux tableaux ci-dessous :

| Donnée en dB | Freq. | PeGe | BW | Nb=FkTB Hyp. F=10 dB | $G_{AR}$ | SER | $GT_B$ compte tenu dégradation bistatique |
|---|---|---|---|---|---|---|---|
| InfraDVBT Mode 8K | 500 MHz | 1 - 100 kW soit 60 à 80 dBm | 8 MHz soit 69 dB/Hz | - 95 dBm | 2 dBi | 0, 03 m$^2$ - 13,5 dB/m$^2$ | 512 soit 27 dB => 24 dB |
| Infra GSM | 900 MHz | 20 W - 1kW soit 43 à 60 dBm | 270 kHz soit 43 dB/Hz | - 109 dBm | 2 dBi | 0, 01 m$^2$ -18,5 dB/m$^2$ | 64 soit 18 dB => 15 dB |

Sous ces conditions le tableau suivant donne des exemples (non limitatifs) de portée atteignables avec une marge de calcul M = 7 dB prise pour le calcul de l'excès de rapport signal à bruit.

| | PeGe | Exemple de portée sur | | $S_{utile\_entrée,i}$ | $S_{utile\_sortie,i}$ | Marge M=7 dB Excès$_{S/B}$ en dB |
| | | Petit avion SER = 10 m$^2$ $D_{Ei,C}$ = $D_{Rj,C}$ = | Gros avion SER = 100 m$^2$ $D_{Ei,C}$ = $D_{Rj,C}$ = | | | |
|---|---|---|---|---|---|---|
| **InfraDVBT** | 1 kW soit 60 dBm | 25 km 25 km | 44,5 km 44,5 km | -111,3 dB | - 87,2 dB | 0 dB |
| **InfraDVBT** | 100 kW soit 80 dBm | 80 km 80 km | 142,3 km 142,3 km | -111,5 dB | - 87,4 dB | 0 dB |
| **Infra GSM Zone urbaine** | 20 W soit 43 dBm | 9,5 km 9,5 km | 16,9 km 16,9 km | -116,6 | -101,6 | 1 dB |
| **Infra GSM Zone rurale** | 300 W soit 55 dBm | 19 km 19 km | 33,8 km 33,8 km | -116,6 | -101,6 | 1 dB |

## Revendications

1. Procédé pour détecter et/ou localiser un engin mobile dans un système de réception exploitant des émetteurs d'opportunité dont le signal comprend des éléments permettant la synchronisation du récepteur comportant les étapes suivantes :

  a) détecter certaines séquences discriminantes du signal utile,
  b) séparer chaque émission présente sur les fréquences porteuses scrutées par le ou les récepteurs par filtrage spatio-temporel des signaux présents sous chaque fréquence porteuse,
  c) identifier les émetteurs Ei correspondant aux signaux reçus,
  d) déterminer la réponse impulsionnelle du canal de propagation pour chaque émetteur Ei et pour chaque détection réalisée sur cet émetteur,
  g) mesurer l'instant d'arrivée du trajet réfléchi par l'engin mobile puis son retard par rapport à l'instant d'émission de l'émetteur,

h) déduire la position de l'engin mobile à l'intersection des ellipsoïdes définis par les foyers constitués des émetteurs Ei reçus et du ou des récepteurs Rj.

2. Procédé selon la revendication 1 **caractérisé en ce qu'**il comporte les étapes suivantes :

e) séparer dans la réponse impulsionnelle la contribution du trajet direct émetteur-récepteur (Ei-Rj) de la contribution du trajet réfléchi mobile (Ei-C- Rj);

f) mesurer l'instant d'arrivée du trajet direct (Ei-Rj) puis son retard par rapport à l'instant d'émission de l'émetteur;

g) mesurer l'instant d'arrivée du trajet réfléchi par l'engin mobile puis son retard ar rapport au signal direct de l'émetteur.

3. Procédé selon l'une des revendications 1 ou 2 **caractérisé en ce qu'**il comporte les étapes suivantes :

i) de mesure des angles d'arrivée du signal réfléchi mobile (azimuth $\theta_j$, site $\Delta_j$) au niveau des récepteurs Rj,

j) de déduction de la position du mobile à l'intersection des ellipsoïdes précédemment définies et de la droite défmie par les angles d'arrivée et le lieu du récepteur Rj.

## Claims

1. Method for detecting and/or locating a mobile vehicle or craft in a reception system operating opportunity transmitters whose signal comprises elements allowing for the synchronization of the receiver, comprising the following steps:

a) detecting certain discriminating sequences of the wanted signal,

b) separating each transmission present on the carrier frequencies scanned by the receiver or receivers by space-time filtering of the signals present under each carrier frequency,

c) identifying the transmitters Ei corresponding to the received signals,

d) determining the impulse response of the propagation channel for each transmitter Ei and for each detection made on that transmitter,

g) measuring the instant of arrival of the path reflected by the mobile vehicle, then its delay relative to the instant of transmission from the transmitter,

h) deducing the position of the mobile vehicle at the intersection of the ellipsoids defined by the focal points consisting of the received transmitters Ei and the receiver(s) Rj.

2. Method according to Claim 1, **characterized in that** it comprises the following steps:

e) separating, in the impulse response, the contribution of the transmitter-receiver forward path (Ei-Rj) from the contribution of the mobile vehicle reflected path (Ei-C-Rj);

f) measuring the instant of arrival of the forward path (Ei-Rj) then its delay relative to the instant of transmission from the transmitter;

g) measuring the instant of arrival of the reflected path by the mobile vehicle then its delay relative to the forward signal from the transmitter.

3. Method according to one of Claims 1 and 2, **characterized in that** it comprises the following steps:

i) measuring angles of arrival of the mobile vehicle reflected signal (azimuth $\theta_j$, bearing $\Delta_j$) at the receivers Rj,

j) deducing the position of the mobile vehicle at the intersection of the ellipsoids previously defined and of the straight line defined by the angles of arrival and the place of the receiver Rj.

## Patentansprüche

1. Verfahren zum Erfassen und/oder Orten eines beweglichen Geräts in einem Empfangssystem, das Opportunitäts-Sender nutzt, deren Signal Elemente enthält, die die Synchronisierung des Empfängers ermöglichen, das die folgenden Schritte aufweist:

a) Erfassen bestimmter diskriminierender Sequenzen des Nutzsignals,

b) Trennen von jeder auf den von dem oder den Empfängern abgetasteten Trägerfrequenzen vorhandenen Sendung durch raum-zeitliche Filterung der unter jeder Trägerfrequenz vorhandenen Signale,

c) Identifizieren der den empfangenen Signalen entsprechenden Sender Ei,

d) Bestimmen der Impulsantwort des Ausbreitungskanals für jeden Sender Ei und für jede an diesem Sender durchgeführte Erfassung,

g) Messen des Ankunftszeitpunkts der vom beweglichen Gerät reflektierten Strecke und dann seiner Verzögerung bezüglich des Sendezeitpunkts des Senders,

h) Ableiten der Position des beweglichen Geräts am Schnittpunkt der Ellipsoide, die von den Foki definiert werden, die aus den empfangenen Sendern Ei und dem oder den Empfängern Rj bestehen.

2. Verfahren nach Anspruch 1, **dadurch gekennzeichnet, dass** es die folgenden Schritte aufweist:

e) Trennen, in der Impulsantwort, des Beitrags der direkten Sender-Empfänger-Strecke (Ei-Rj) vom Beitrag der vom beweglichen Gerät reflektierten Strecke (Ei-C-Rj);

f) Messen des Ankunftszeitpunkts der direkten Strecke (Ei-Rj) und dann seiner Verzögerung bezüglich des Sendezeitpunkts des Senders;

g) Messen des Ankunftszeitpunkts der vom beweglichen Gerät reflektierten Strecke und dann seiner Verzögerung bezüglich des direkten Signals des Senders.

3. Verfahren nach einem der Ansprüche 1 oder 2, **dadurch gekennzeichnet, dass** es die folgenden Schritte aufweist:

i) Messen der Ankunftswinkel des vom beweglichen Gerät reflektierten Signals (Azimut $\theta_j$, Elevation $\Delta_j$) in Höhe der Empfänger Rj,

j) Ableiten der Position des beweglichen Geräts am Schnittpunkt der vorher definierten Ellipsoide und der von den Ankunftswinkeln und dem Standort des Empfängers Rj definierten Geraden.

FIG.1

FIG.2

FIG.3

1 / Détection et Synchronisation temps/Doppler
sur fenêtre glissante en temps
calcul d'un critère C(n) par fenêtre

2 / Calcul du critère C(n) sur chaque fenêtre
Couverture du Domaine d'excursion
retard / Doppler

K symboles ou chips pilotes
durée d'intégration $T_i$

| hypothesis N°1 | hypothesis N°1 | hypothesis N°1 |
| hypothesis N°2 | hypothesis N°2 | hypothesis N°2 |
| hypothesis N°3 | hypothesis N°3 | hypothesis N°3 |
| hypothesis N°4 | hypothesis N°4 | hypothesis N°4 |

| hypothesis $N_H$-1 | hypothesis $N_H$-1 | hypothesis $N_H$-1 |

$\Delta t (= T_{s/n} \; n \geq 2)$

Hypothèses Doppler
(durée d'intégration
et interpolation)

Synchro.
Doppler

$\Delta \nu_{Xdb}$

Hyp-Freq.3

Hyp-Freq.2

Hyp-Freq.1

Synchro.
temps

hypothèses retard
(échantillonnage $\geq$ critère Nyquist
et interpolation)

FIG.4A

FIG.4B

## Détection ,synchronisation et séparation spatiale de source
## Structure du traitement

REPLIQUES DE LA SEQUENCE
DE SYNCHRONISATION

filtre adapté spatial w(n)

entrée au rythme $T_e$

$x_{(n)} = \sum_{i=1=NL} g_i \cdot s_{(n-i)} + b_{(n)}$

$x_1(n)$ — $w_1$
$x_2(n)$ — $w_2$
$x_3(n)$ — $w_3$
$x_4(n)$ — $w_4$
$x_5(n)$ — $w_5$

$\Sigma$ → $y(n)$

$(\tilde{d}_n)$   $(\tilde{d}_n^*)$

$+$
$-$
$\times$

$w(n) = R_{xx}(n)^{-1} r_{x\tilde{d}}(n)$

$w(n)$ minimise $e(n)$

Erreur
e.q.m $\varepsilon(n)$

Calcul et réalisation du filtrage spatial
→ réjection des brouilleurs
→ réjection des trajets décorrellés

Décision(détection/synchronisation)

CRITERE DE SYNCHRONISATION

$$C(n) = \frac{I}{K} \sum_{k=0}^{K-1} Y_{(k)} \tilde{d}_{(k)}^*$$
$$= \left(r_{x\tilde{d}}(n)\right)^{T^*} \left[R_{xx}(n)\right]^{-1} \left[r_{x\tilde{d}}(n)\right]$$

$C(n)$ >seuil?

Si oui   décision de détection
Prise de synchronisation

Calcul du critère de synchronisation
décision de détection par seuillage

# FIG.5

## Estimation de canal mono-voie+calcul de puissance
## structure du traitement

Echantillonneur
au rythme $T_s$

traite les interférences
intersymboles résiduelles

filtre adapté
temporel

Egalisateur
Viterbi

SYMBOLES
DECIDES

signal
voie I
$x_I(n)$

ou

$y(n)$
signal
sortie
FAST

$+$
$-$

$[\hat{h}^{T^*} D](n)$

filtre propagation g
1D au rythme $T_s/N$

$h_0$ $h_1$ ... $h_{NL-1}$

$h_{NL-1}$ $h_1$ $h_0$

SEQUENCE D'APPRENTISSAGE
au rythme $T_s/N$

$D = (d_0, d_1, ..., d_{NL-1})^T$

$| |^2$  estimation énergie $x_1$

$$C_I = \sum_{I=1}^{NL} [\hat{h}(I)]^2$$

$| |^2$  estimation énergie $I_I + N_I$

$$I_I + N_I = \sum_{I=1}^{NL} [x(I) - \hat{h}^{T^*} d(I)]^2$$

# FIG.6

# Caractéristiques des signaux GSM

Légende :
- ▨ fréquence fixe nécessairement
- ☐ Saut de fréquence : 217 sauts/s

Trame TDMA=8 time slot

Canal 1
Canal 2
Canal i fréq.balise — SCH,FCCH,BCCH
Canal N

Canaux BTS
900 MHz
1800 MHz
1900 MHz

SIGNAL DE SYNCHRONISATION SCH
(inclus dans BCCH)

Messages diffusant
- un code couleur,
- un numéro de synchro.trame
- un code d'identité codés

| 3 | 39 | 64 | 39 | 3 | 8,25 |

bits de queue =000 | bits utiles | Séquence discriminante | bits utiles | bits de queue =000 | délai de garde

rythme Baud : 270,833 kbauds

durée d'un symbole : 3,692 us

burst de 148 bits : 546,462 us + 30 us

total : 576,875 us = 148+8,25 = 156,25 symboles

séquence d'apprentissage : 64 bits , unique

| | Séquence |
|---|---|
| Bn°42 à Bn°105 | 1011100101100010000000100000011111 0010110101000101011101100001101 |

# FIG.7

EP 1 500 951 B1

Power Spectral Density

Envelop

Bandwidth=7.61MHz

Modulated
carrier

Fc

Frequency

1/Tu

-65
-70
-75
-80
-85
-90
-95
-100
-105

Fewer level (dB)

661 662 663 664 665 666 667 668 669 670 671

Frequency (MHz)

| Mode | 8k mode | | | | 2k mode | | | |
|---|---|---|---|---|---|---|---|---|
| Guard interval | 1/4 | 1/8 | 1/16 | 1/32 | 1/4 | 1/8 | 1/16 | 1/32 |
| Guard interval duration | 224μs | 112μs | 56μs | 28μs | 56μs | 28μs | 14μs | 7μs |
| Symbol duration | 1120μs | 1008μs | 952μs | 924μs | 280μs | 252μs | 238μs | 231μs |

Identification des émetteurs DVB-T sur porteuse TPS

1 TPS block=1 frame =68 symbols

37 bits   8 bits                          8 bits

•••  Transmission param. | cell_id | BCH | Transmission param. | cell_id | BCH  •••

frame n                              frame n+1

8 first bits of cell_id              8 last bits of cell_id

Place des bits pilotes dans le symbole

$K_{min}$ =0          frequency          $K_{max}$

time

symbol 67
symbol 0
symbol 1
symbol 2

● scattered pilot

Index scattered pilot = k
Index symbol = 1

$k = K_{min} + 3 \times (L \bmod 4) + 12 p$

$k \in [ K_{min}, K_{max} ]$

$K_{min} = 0$

$K_{max} = 1704$ en mode 2k

$K_{max} = 6816$ en mode 8k

# FIG.8

**RÉFÉRENCES CITÉES DANS LA DESCRIPTION**

**Documents brevets cités dans la description**

- WO 014764 A